(19) Europäisches Patentamt
European Patent Office
Office européen des brevets

(11) Publication number: 0 342 780 B1

# (12) EUROPEAN PATENT SPECIFICATION

(45) Date of publication of patent specification: 21.12.94

(51) Int. Cl.5: C08L 67/02, //(C08L67/02, 25:04,23:02),(C08L67/02,33:00, 23:02)

(21) Application number: 89302461.2

(22) Date of filing: 13.03.89

## (54) Thermoplastic polyester resin composition.

(30) Priority: 16.03.88 JP 62945/88

(43) Date of publication of application:
23.11.89 Bulletin 89/47

(45) Publication of the grant of the patent:
21.12.94 Bulletin 94/51

(84) Designated Contracting States:
AT BE CH DE ES FR GB GR IT LI LU NL SE

(56) References cited:
EP-A- 0 060 601
EP-A- 0 180 648
EP-A- 0 287 245
EP-A- 0 295 706
FR-A- 2 207 162

CHEMICAL ABSTRACTS, vol. 87, no. 2, 11 July 1977 Columbus, Ohio, USA page 45;ref. no. 6967P

WPIL, FILE SUPPLIER, Derwent Publications Ltd.,&& JP-A-57 123 251

(73) Proprietor: POLYPLASTICS CO. LTD.
3-13, Azuchi-machi 2-chome
Chuo-Ku Osaka-shi (JP)

(72) Inventor: Mochizuki, Mitsuhiro
945-3, Temma
Fuji-shi Shizuoka (JP)
Inventor: Wada, Mitsuo
109-9-202, Heigaki
Fuji-shi Shizuoka (JP)

(74) Representative: Jackson, Peter et al
HYDE, HEIDE & O'DONNELL
10-12 Priests Bridge
London SW15 5JE (GB)

EP 0 342 780 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a thermoplastic polyester resin composition. Particularly, it relates to a thermoplastic polyester resin composition which is improved in flexing endurance and impact resistance and is excellent in mechanical properties such as stiffness, heat resistance and moldability.

[Prior Art]

A thermoplastic polyester resin has excellent mechanical and electrical properties and is excellent in chemical resistance and processability, so that it has been widely used in the production of components for automobiles, electric or electronic equipment, business machines, other precision machines, building material, sundries and the like. Furthermore, a recent tendency is to try application of a polyester resin to special uses, so that enhanced levels of properties or special properties are often required with respect to the resin. For example, it has been expected to develop a resin composition which is further improved in flexing endurance and impact resistance without lowering the other mechanical properties, heat resistance and moldability thereof.

To satisfy the enhanced levels of requirements, a flexible resin or rubbery substance has been generally added to a thermoplastic polyester resin to thereby make the polyester resin flexible. Particularly, many studies have been made for improving the impact resistance of a polyester resin.

For example, Japanese Patent Publication Nos. 26223/1970, 26224/1970 and 26225/1970 disclosed methods of adding an ethylene-vinyl acetate copolymer, a butadiene-butyl acrylate copolymer or an ionic ethylene-sodium methacrylate copolymer to a polyester resin. However, these methods have disadvantages in that these copolymers must be added in large amounts in order to attain sufficient effects and that the copolymers are poor in affinity for a polyester resin and are mostly insufficient in thermal deformation temperature, so that the addition of them brings about remarkable lowering in the other physical properties, particularly stiffness or shear strength or exerts an adverse effect on the moldability or heat resistance, though the methods have an appreciable effect on the improvement of the impact resistance.

Further, Japanese Patent Laid-Open Nos. 32045/1977 and 144452/1976 disclosed a method of adding an olefin copolymer comprising an $\alpha$-olefin, an $\alpha,\beta$-unsaturated acid glycidyl ester and, if necessary, other monomer such as vinyl acetate or acrylate. Although this method is pretty effective in improving the impact resistance, the obtained composition is still insufficient in impact resistance and unavoidably causes a remarkable lowering in the stiffness.

Meanwhile, there have hardly been made studies on the improvement in the flexing endurance of a polyester resin which is the other main object of the present invention, but it has been generally thought that the flexing endurance as well as the impact resistance would be improved by adding a flexible resin or the like to the resin to thereby make the resin flexible.

The inventors of the present invention have made a follow-up with respect to a composition comprising a polyester resin and a flexible resin as described above. As a result, it has been confirmed that although the composition becomes flexible, the composition is scarcely improved in flexing endurance unexpectedly and causes a problematic lowering in the mechanical strengths such as stiffness or the heat resistance (thermal deformation temperature), so that the composition does not meet the above requirements at all.

[ Summary of the Invention ]

In view of the above problems, the inventors of the present invention have eagerly studied to obtain a thermoplastic polyester resin composition which is sufficiently improved in flexing endurance and impact resistance, substantially exerting no adverse effect on the excellent characteristics inherent in a thermoplastic polyester resin. On the basis of the studies, the present invention has been accomplished.

Namely, the present invention relates to a thermoplastic polyester resin composition comprising

(A) 100 parts by weight of a thermoplastic polyester resin,

(B) 1 to 100 parts by weight of a polymer or copolymer mainly comprising repeating units represented by the following general formula (1):

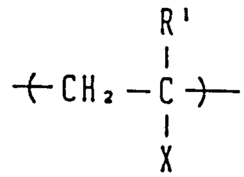

(1)

wherein $R^1$ stands for a hydrogen atom or a lower alkyl group and X stands for one or more groups selected from among -COOH and lower alkyl esters thereof,

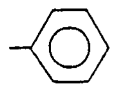

and -CN,

and

(C) 0.5 to 80 parts by weight of ($C^1$) an olefin copolymer comprising an $\alpha$-olefin and an $\alpha,\beta$-unsaturated acid glycidyl ester or ($C^2$) a graft copolymer comprising said olefin copolymer ($C^1$) and one or more (co)-polymers mainly comprising repeating units represented by the following general formula (2), wherein said copolymer ($C^1$) and said (co)polymers are chemically bonded to each other to form a branched or crosslinked structure:

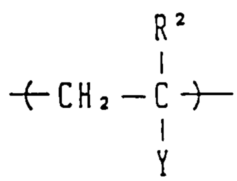

··· (2)

wherein $R^2$ stands for a hydrogen atom or a lower alkyl group and Y stands for one or more groups selected from -COOH, an alkyl ester of -COOH having 1 to 8 carbon atoms in the alkyl

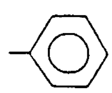

and -CN.

The thermoplastic polyester resin (A) to be used in the present invention may be any one prepared by the polycondensation of a dicarboxylic acid with a dihydroxy compound, that of a hydroxy carboxylic acid or that of these three compounds and includes homopolyesters and copolyesters.

Examples of the dicarboxylic acid to be used in the preparation of the thermoplastic polyester resin (A) include conventional dicarboxylic acids such as terephthalic, isophthalic, naphthalenedicarboxylic, diphenyldicarboxylic, diphenyl ether dicarboxylic, diphenylethanedicarboxylic, cyclohexanedicarboxylic, adipic and sebacic acids, and alkyl-, alkoxy- or halogen-substituted derivatives thereof. Further, these dicarboxylic acids may be used as their ester-forming derivatives, for example, esters thereof with lower alcohols (such as dimethyl ester). According to the present invention, one or more compounds selected from among those described above may be used.

Examples of the dihydroxy compound include dihydroxy compounds such as ethylene glycol, propylene glycol, butanediol, neopentyl glycol, butenediol, hydroquinone, resorcinol, dihydroxyphenol, naphthalenediol, dihydroxydiphenyl ether, cyclohexanediol and 2,2-bis(4-hydroxyphenyl)propane; polyoxyalkylene glycols and alkyl-, alkoxy- or halogen-substituted derivatives thereof. According to the present invention, one or more compounds selected from among those described above may be used.

Examples of the hydroxy carboxylic acid include hydroxy carboxylic acids such as hydroxybenzoic, hydroxynaphthoic and hydroxydiphenylene-carboxylic acids and alkyl-, alkoxy- or halogen-substituted derivatives thereof. Further, ester-forming derivatives of these compounds may be used as the hydroxy carboxylic acid. According to the present invention, one or more compounds selected from among those

described above may be used.

Any of the thermoplastic polyesters prepared by the polycondensation of compounds as described above may be used in the present invention either alone or as a mixture of two or more of them. It is preferable to use a polyester mainly comprising polyalkylene terephthalate, still preferably one mainly comprising polybutylene terephthalate and when such a polyester is used, the effect of the present invention is particularly remarkable.

Alternatively, it is also possible to use a thermoplastic polyester modified by conventional crosslinking, graft polymerization or the like in the present invention.

The polymer to be used as the component (B) in the present invention is a polymer or copolymer mainly comprising repeating units represented by the following general formula (1):

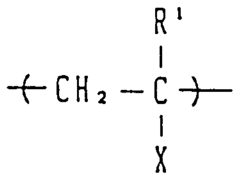

(1)

wherein $R^1$ is hydrogen or a lower alkyl group, preferably having 1 to 6 carbon atoms, and X is one or more groups selected from -COOH and lower alkyl esters thereof, the alkyl preferably having 1 to 6 carbon atoms, phenyl and cyano,
and can be prepared by the polymerization of one monomer selected from among vinyl cyanide compounds such as acrylonitrile or methacrylonitrile; acrylates such as methyl acrylate, ethyl acrylate or butyl acrylate; methacrylates such as methyl methacrylate or butyl methacrylate; acrylic and methacrylic acids and aromatic vinyl compounds such as styrene or $\alpha$-methylstyrene, or the copolymerization of two or more of these compounds.

Particular examples of the component (B) include polymethyl methacrylate, polyethyl acrylate, polybutyl acrylate, polyacrylonitrile, polystyrene, acrylonitrile-styrene copolymers, methyl methacrylate-styrene copolymers, methyl methacrylate-acrylic acid copolymers and methyl methacrylate-butyl acrylate copolymers.

These (co)polymers may be modified with a small amount of an ethylenically unsaturated compound, rubbery component or acid anhydride by copolymerization or graft polymerization.

According to the present invention, one or more polymers selected from among those described above may be added to a polyester resin. Particularly, it is preferred to add an acrylonitrile-styrene copolymer, polymethyl methacrylate or polystyrene.

Further, the polymer (B) may be added in an amount of 1 to 100 parts by weight, preferably 3 to 80 parts by weight, per 100 parts by weight of the polyester resin (A).

In the composition of the present invention, the polymer (B) not only serves to maintain the stiffness and strength, but also has a remarkable effect on the improvement in the flexing endurance. If the amount of the polymer (B) added is too small, these advantageous effects will not be exhibited, while if it is too large, the excellent mechanical, physical and chemical properties inherent in a thermoplastic polyester resin will be lost and the processability and appearance will be adversely affected unfavorably.

The polymer to be used as the component (C) in the present invention is ($C^1$) an olefin copolymer comprising an $\alpha$-olefin and an $\alpha,\beta$-unsaturated acid glycidyl ester or ($C^2$) a graft copolymer comprising said olefin copolymer ($C^1$) and one or more (co)polymers mainly comprising repeating units represented by the following general formula (2), wherein said copolymer ($C^1$) and said copolymers are chemically bonded to each other to form a branched or crosslinked structure:

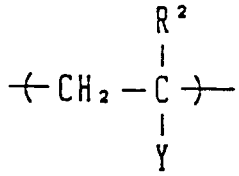

(2)

wherein $R^2$ is hydrogen or a lower alkyl, preferably having 1 to 6 carbon atoms, and Y is -COOH, a lower alkyl ester of -COOH, preferably having 1 to 8 carbon atoms in the alkyl, such as -COOH, $-COOCH_3$, $-COOC_2H_5$, $-COOC_4H_9$, $-COOCH_2CH(C_2H_5)C_4H_9$, phenyl or cyano.

First, the olefin copolymer ($C^1$) which is one of the polymers usable as the component (C) will be described.

One of the monomers constituting the olefin copolymer ($C^1$) is an α-olefin and examples thereof include ethylene, propylene and butene-1, among which ethylene is preferred. Meanwhile, the α,β-unsaturated acid glycidyl ester which is the other monomer constituting the olefin copolymer ($C^1$) is a compound represented by the following general formula (3):

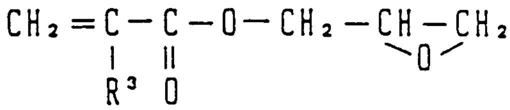

(3)

wherein $R^3$ stands for a hydrogen atom or a lower alkyl group,
and examples of the compound include glycidyl acrylate, glycidyl methacrylate and glycidyl ethacrylate, among which glycidyl methacrylate is preferred. The olefin copolymer ($C^1$) can be prepared by copolymerizing an olefin such as ethylene with an α,β-unsaturated acid glycidyl ester by a conventional radical polymerization method.

It is preferred that the olefin copolymer ($C^1$) comprise 70 to 99% by weight of an α-olefin and 30 to 1% by weight of an unsaturated acid glycidyl ester.

The olefin copolymer ($C^1$) may further contain other vinyl monomer, for example, vinyl acetate, styrene or methyl acrylate, in an amount not exceeding 30% by weight.

Then the graft copolymer ($C^2$) which is the other of the polymers usable as the component (C) will be described.

The graft copolymer ($C^2$) is one comprising said copolymer ($C^1$) and one or more (co)polymers comprising repeating units represented by the general formula (2), wherein said olefin copolymer and the (co)polymers are chemically bonded to each other to form a branched or crosslinked structure. Examples of the (co)polymer to be grafted include polymethyl methacrylate, polyethyl acrylate, polybutyl acrylate, poly-2-ethylhexyl acrylate, polystyrene, polyacrylonitrile, acrylonitrile-styrene copolymers, butyl acrylate-methyl methacrylate copolymers and butyl acrylate-styrene copolymers. These polymers and copolymers can be prepared by the radical polymerization of the corresponding vinyl monomer(s).

Although the process for the preparation of the graft copolymer comprising the olefin copolymer ($C^1$) and a specified (co)polymer as described above is not particularly limited, the graft copolymer can be easily prepared by radical reaction. For example, a specified (co)polymer as described above is reacted with a peroxide to generate free radicals therein and the resulting (co)polymer is kneaded with an olefin copolymer ($C^2$) to obtain a graft copolymer ($C^2$).

The olefin copolymers ($C^1$) and graft copolymers ($C^2$) thus prepared are all usable as the component (C) and they may be used either alone or as a mixture of two or more of them. It is particularly preferred to use the graft copolymer ($C^2$) in the present invention and the graft copolymer ($C^2$) exhibits a unique effect due to its branched or crosslinked structure. Particularly, it is still preferred to use a graft copolymer comprising the olefin copolymer ($C^1$) and a specified (co)polymer as described above in a weight ratio between 95 : 5 and 40 : 60.

In the present invention, the component (C) may be added in an amount of 0.5 to 80 parts by weight, preferably 1 to 50 parts by weight, per 100 parts by weight of the polyester resin (A).

If the amount of the component (C) is too small, the objective improvement in the flexing endurance and impact resistance will not be attained, while if the amount thereof is too large, the thermal deformation temperature will be lowered and the mechanical properties such as stiffness will be adversely affected.

Thus, the composition of the present invention is remarkably improved in flexing endurance and impact resistance and is excellent in mechanical properties such as stiffness and shear strength and moldability.

Particularly, the composition is excellent in the endurance against sharp bending and repeated bending, so that it is particularly suitable for the production for a hinged molded article.

Depending upon the object, the composition of the present invention may further contain a fibrous, powdery, granular or lamellar filler to thereby improve the mechanical strengths, heat stability, dimensional stability (resistance to deformation or warping), electrical properties or the like. Although the addition of such a filler lowers the maximum bending angle of the composition, the filled composition according to the present invention is superior to the one prepared according to the prior art in endurance and toughness.

The fibrous filler includes inorganic fibrous materials such as glass fiber, asbestos fiber, carbon fiber, silica fiber, silica-alumina fiber, zirconia fiber, boron nitride fiber, silicon nitride fiber, boron fiber, potassium titanate fiber and fibers of metals such as stainless steel, aluminum, titanium, copper or brass, among which

glass fiber and carbon fiber are particularly representative. Further, it is possible to use a high-melting organic fibrous material such as polyamide, fluororesin or acrylic resin as well as an inorganic fibrous fiber as described above.

Examples of the powdery or granular filler include carbon black, silica, quartz powder, glass bead, glass powder, silicates such as calcium silicate, aluminum silicate, kaolin, talc, clay, diatomaceous earth and wollastonite; metal oxides such as iron oxides, titanium oxide, zinc oxide and alumina; metal carbonates such as calcium carbonate and magnesium carbonate; metal sulfates such as calcium sulfate and barium sulfate; silicon carbide, silicon nitride, boron nitride and various metal powders.

The lamellar filler includes mica, glass flake and various metal foils.

These inorganic fillers may be used alone or as a mixture of two or more of them. The combination of a fibrous filler, particularly glass fiber or carbon fiber, with a granular and/or lamellar filler is preferred for producing an article which is excellent in both mechanical strengths and dimensional accuracy and electrical properties.

If necessary, a coupling agent or a surface treatment may be used together with a filler as described above. Examples thereof include functional compounds such as epoxy, isocyanate, silane and titanate compounds. These compounds may be preliminarily applied to the filler or may be added together with a filler in the preparation of the composition.

The amount of the inorganic filler used per 100 parts by weight of the polyester resin (A) is 0 to 200 parts by weight and may be suitably selected depending upon the object or the kind of the additives. For example, when the object is to enhance the mechanical strengths (such as stiffness), the amount is preferably 5 to 200 parts by weight, still preferably 10 to 150 parts by weight. If the amount of the inorganic filler is too small, the mechanical strengths will be slightly poor, while if it is too large, the moldability of the resulting composition will be poor and the molded article made thereof will be problematic in mechanical strengths.

The composition of the present invention may further contain other thermoplastic resin as an auxiliary component in addition to the above components depending upon the object. The thermoplastic resin may be any one as far as it is stable at high temperature. Examples thereof include polyethylene, polyamide, polycarbonate, polyphenylene sulfide, polyphenylene oxide, polyacetal, polysulfone, polyether sulfone, polyetherimide, polyether ketone and fluororesins. These resins may be also used as a mixture of two or more of them.

Further, the composition of the present invention may suitably contain, depending upon the required performance, additives which are generally used in a thermoplastic or thermosetting resin. Examples of such additives include stabilizers such as antioxidant or ultraviolet absorber; antistatic, flame retardant, coloring agent such as dye and pigment, lubricant, crystallization accelerator and nucleating agent.

The polyester resin composition of the present invention can be prepared with conventional equipment for the preparation of a synthetic resin composition by a conventional process therefor. That is, necessary components are mixed and kneaded and extruded with a single- or twin-screw extruder to obtain a molding pellet. In this process, a master batch prepared by preliminarily mixing a part of the components may be mixed with the residual part thereof, followed by the molding. Alternatively, a part or the whole of the resin components may be pulverized prior to mixing and extrusion.

As described above, the polyester resin composition of the present invention is remarkably improved in flexing endurance and impact resistance with substantially no lowering in the other physical properties, so that it is promising as a material suitable for various components in the field of automobiles, electric or electronic equipment, business machines, building material and sundries. Particularly, owing to its excellent flexing endurance, it is suitable for the production of a hinged molded article such as connectors for automobiles or electric equipment.

[ Brief Description of Drawing ]

Fig. 1 is a schematic illustration of a test piece for the flexing endurance test, wherein (a) is a plan view thereof, (b) is an elevational view thereof and (c) is an enlarged view of the bent area thereof.

[Example]

The present invention will now be further described in more detail by referring to the following Examples, though it is not limited by them at all.

Examples 1 to 3 and Comparative Examples 1 to 5

An acrylonitrile-styrene copolymer (component (B)) and an ethylene-glycidyl methacrylate (85 : 15) copolymer (component (C); referred to as "E/GMA" in Table 1) were added to polybutylene terephthalate (PBT) each in a ratio given in Table 1. The obtained mixture was kneaded with a twin-screw extruder to obtain a pellet. This pellet was injection-molded into a flexing test piece having a shape shown in Fig. 1 and standard test pieces for the measurement of various physical properties to determine the flexing endurance and other characteristics. The results are shown in Table 1.

For comparison, a composition containing neither the component (B) nor the component (C) (PBT resin alone) and compositions containing the component (B) or (C) alone were prepared and examined similar to the composition described above. The results are also shown in Table 1.

The examination items and test methods are as follows:

tensile characteristics:
determined according to ASTM D-638

Izod impact strength (notched):
determined according to ASTM D-256

flexural modulus:
determined according to ASTM D-790

flexing endurance:
a test piece having a shape shown in Fig. 1 was bent at an angle of 180° (in a direction of the arrow shown in Fig. 1) in an atmosphere of 23°C and 50% RH to determine the endurance.

number of samples: n = 10

Evaluation A: After a test piece had been once bent at an angle of 180°, the appearance of the resulting piece was observed with eyes to evaluate it according to the following criteria, while the average thereof is shown in Tables:

5: abnormal phenomenum was hardly observed.
4: fine crack was generated in the bent area to result in blushing.
3: slightly grown crack was observed, but the elasticity was retained
2: the bent area was broken, and connected only by the surface thereof.
1: fractured

Evaluation B: A test piece was bent at an angle of 180° ten times to determine the retention of tensile strength with respect to the bent area.

Examples 4 to 10 and Comparative Examples 6 to 12

An acrylonitrile-styrene copolymer (component (B)) and an ethylene-glycidyl methacrylate copolymer (component (C)) selected from those which will be described were added to a polybutylene terephthalate resin (PBT) or a brominated copolyester which will be described each in a ratio given in Table 2. The obtained compositions were examined and evaluated in a similar manner to the one described in Examples 1 to 3. The results are shown in Table 2.

For comparison, a composition containing neither the component (B) nor the component (C) and compositions each containing the composition (B) or (C) alone were prepared and evaluated similar to the compositions described above. The results are shown in Table 2. The E/GMA graft copolymer used are as follows:

- graft copolymer of E/GMA (70) with an acrylonitrile-styrene copolymer (30)

(referred to as "E/GMA-g-AN/S" in Table 2)

- graft copolymer of E/GMA (70) with a methyl methacrylate-butyl acrylate copolymer (30)

(referred to as "E/GMA-g-MMA/BA in Table 2)

The brominated copolyester is one prepared by copolymerizing dimethyl terephthalate, 1,4-butanediol and an adduct of tetrabromobisphenol A with ethylene oxide (2 mol) and having an intrinsic viscosity of 1.0 and a bromine content of 6.5% by weight.

Examples 11 to 14 and Comparative Examples 13 to 17

Polymethyl methacrylate or polystyrene (component B)) and a graft copolymer (component (C)) selected from among the three graft copolymers of an ethylene-glycidyl methacrylate copolymer (E/GMA) which will be described were added to a polybutylene terephthalate resin (PBT) each in a ratio given in Table 3. The obtained compositions were evaluated in a similar manner to the one described in Examples 1 to 3. The results are shown in Table 3.

For comparison, a composition containing neither the component (B) nor the component (C) and compositions containing the component (B) or the component (C) alone were prepared and evaluated similar to the compositions described above. The results are also shown in Table 3.

The graft copolymers of E/GMA used are as follows:

- graft copolymer of E/GMA (70) with an acrylonitrile-styrene copolymer (30)

(referred to as "E/GMA-g-AN/S in Table 3)

- graft copolymer of E/GMA (70) with polystyrene (30)

(referred to as "E/GMA-g-PS in Table 3)

- graft copolymer of E/GMA (70) with polymethyl methacrylate (30)

(referred to as "E/GMA-g-PMMA in Table 3)

Examples 15 and 16 and Comparative Examples 18 to 21

An acrylonitrile-styrene copolymer (component (B)), E/GMA-g-AN/S (component (C)) and a glass fiber (diameter: 13 µm, length: 6 mm, inorganic fiber) were added to polybutylene terephthalate (PBT) or polyethylene terephthalate (PET) each in a ratio given in Table 4. The obtained compositions were examined and evaluated.

For comparison, a composition comprising the component (A) and a glass fiber and a composition containing the component (A), a glass fiber and the component (C) were prepared and evaluated similar to the compositions described above.

The flexing endurance (toughness) was evaluated by the angle at which a test piece having a shape shown in Fig. 1 was broken by bending. The results are shown in Table 4.

Table 1

| | | | | Ex. 1 | Ex. 2 | Ex. 3 | Comp. Ex. 1 | Comp. Ex. 2 | Comp. Ex. 3 | Comp. Ex. 4 | Comp. Ex. 5 |
|---|---|---|---|---|---|---|---|---|---|---|---|
| (A) | PBT (pts. wt.) | | | 75 | 65 | 60 | 100 | 85 | 75 | 90 | 85 |
| (B) | acrylonitrile-styrene copolymer ( " ) | | | 15 | 25 | 25 | — | 15 | 25 | — | — |
| (C) | E/GMA ( " ) | | | 10 | 10 | 15 | — | — | — | 10 | 15 |
| Physical properties | flexing endurance | 23°C, 50% RH | evaluation A (observation with eyes) | 4.1 | 4.5 | 4.4 | 2.3 | 4.0 | 4.3 | 2.9 | 3.1 |
| | | | evaluation B (retention of strength) | 84 | 90 | 90 | 20 | 81 | 88 | 49 | 53 |
| | Izod impact strength, notched (kg·cm/cm) | | | 8.2 | 7.7 | 8.9 | 3.5 | 1.9 | 1.5 | 10.5 | 13.4 |
| | flexural modulus ($kg/cm^2$) | | | 23200 | 24400 | 23100 | 26200 | 27600 | 28500 | 19000 | 17000 |
| | tensile strength ($kg/cm^2$) | | | 545 | 572 | 532 | 582 | 610 | 620 | 460 | 435 |
| | tensile elongation (%) | | | 78 | 56 | 77 | 200< | 32 | 14 | 200< | 200< |

Table 2

| | | Ex. 4 | Ex. 5 | Ex. 6 | Ex. 7 | Ex. 8 | Ex. 9 | Ex. 10 |
|---|---|---|---|---|---|---|---|---|
| (A) | PBT (pts. wt.) | 85 | 75 | 65 | 60 | 75 | 60 | — |
| | brominated copolyester ( " ) | — | — | — | — | — | — | 75 |
| (B) | acrylonitrile-styrene copolymer ( " ) | 10 | 15 | 25 | 25 | 15 | 25 | 15 |
| (C) | E/GMA-g-AN/S ( " ) | 5 | 10 | 10 | 15 | — | — | 10 |
| | E/GMA-g-MMA/BA ( " ) | — | — | — | — | 10 | 15 | — |
| Physical properties | flexing endurance, 23°C, 50% RH, evaluation A (observation with eyes) | 4.2 | 4.3 | 4.7 | 4.7 | 4.2 | 4.6 | 4.2 |
| | flexing endurance, 23°C, 50% RH, evaluation B (retention of strength) | 81 | 88 | 95 | 96 | 86 | 93 | 86 |
| | Izod impact strength, nothced (kg·cm/cm) | 7.8 | 10.1 | 9.5 | 12.0 | 10.2 | 12.4 | 10.4 |
| | flexural modulus ($kg/cm^2$) | 24100 | 23700 | 25200 | 23800 | 23500 | 23700 | 24000 |
| | tensile strength ($kg/cm^2$) | 566 | 550 | 576 | 540 | 541 | 535 | 541 |
| | tensile elongation (%) | 102 | 86 | 62 | 87 | 91 | 94 | 92 |

Table 2 (cont'd)

| | | (Comp. Ex. 1) | (Comp. Ex. 2) | (Comp. Ex. 3) | Comp. Ex. 6 | Comp. Ex. 7 | Comp. Ex. 8 | Comp. Ex. 9 | Comp. Ex. 10 | Comp. Ex. 11 | Comp. Ex. 12 |
|---|---|---|---|---|---|---|---|---|---|---|---|
| (A) | PBT (pts. wt.) | 100 | 85 | 75 | 90 | 85 | 90 | 85 | — | — | — |
| | brominated copolyester ( " ) | — | — | — | — | — | — | — | 100 | 85 | 90 |
| (B) | acrylonitrile-styrene copolymer ( " ) | — | 15 | 25 | — | — | — | — | — | 15 | — |
| (C) | E/GMA-g-AN/s ( " ) | — | — | — | 10 | 15 | — | — | — | — | 10 |
| | E/GMA-g-MMA/BA ( " ) | — | — | — | — | — | 10 | 15 | — | — | — |
| physical properties | flexing endurance, 23°C 50% RH, evaluation A (observation with eyes) | 2.3 | 4.0 | 4.3 | 3.3 | 3.5 | 3.4 | 3.6 | 2.5 | 3.8 | 3.2 |
| | flexing endurance, 23°C 50% RH, evaluation B (retention of strength) | 20 | 81 | 88 | 60 | 65 | 61 | 67 | 24 | 78 | 59 |
| | Izod impact strength, notched (kg·cm/cm) | 3.5 | 1.9 | 1.5 | 16.4 | 18.4 | 18.5 | 21.2 | 3.4 | 1.7 | 16.0 |
| | flexural modulus ($kg/cm^2$) | 26200 | 27600 | 28500 | 20100 | 17900 | 19400 | 17500 | 26800 | 28000 | 20400 |
| | tensile strength ($kg/cm^2$) | 582 | 610 | 620 | 532 | 482 | 504 | 480 | 557 | 590 | 512 |
| | tensile elongation (%) | 200< | 32 | 14 | 200< | 200< | 200< | 200< | 200< | 34 | 200< |

Table 3

| | | | | Ex. 11 | Ex. 12 | Ex. 13 | Ex. 14 | Comp. Ex. 13 | Comp. Ex. 14 | Comp. Ex. 15 | Comp. Ex. 16 | Comp. Ex. 17 |
|---|---|---|---|---|---|---|---|---|---|---|---|---|
| (A) | PBT (pts. wt.) | | | 65 | 65 | 65 | 65 | 75 | 75 | 90 | 90 | 90 |
| (B) | polymethyl methacrylate ( " ) | | | 25 | 25 | 25 | — | 25 | — | — | — | — |
| | polystyrene ( " ) | | | — | — | — | 25 | — | 25 | — | — | — |
| (C) | E/GMA-g/AN/S ( " ) | | | 10 | — | — | 10 | — | — | 10 | — | — |
| | E/GMA-g-PS ( " ) | | | — | 10 | — | — | — | — | — | 10 | — |
| | E/GMA-g-PMMA ( " ) | | | — | — | 10 | — | — | — | — | — | 10 |
| Physical properties | flexing endurance | 23°C 50% RH | evaluation A (observation with eyes) | 4.6 | 4.5 | 4.5 | 4.6 | 4.1 | 4.0 | 3.3 | 3.2 | 3.2 |
| | | | evaluation B (retention of strength) | 94 | 94 | 92 | 94 | 83 | 84 | 60 | 56 | 57 |
| | Izod impact strength, notched (kg·cm/cm) | | | 8.9 | 8.7 | 9.2 | 9.0 | 1.8 | 1.6 | 16.4 | 16.2 | 16.0 |
| | flexural modulus ($kg/cm^2$) | | | 24800 | 24700 | 24900 | 24800 | 28400 | 28100 | 20100 | 19800 | 20200 |
| | tensile strength ($kg/cm^2$) | | | 568 | 571 | 566 | 574 | 615 | 597 | 532 | 515 | 528 |
| | tensile elongation (%) | | | 60 | 63 | 57 | 62 | 16 | 17 | 200< | 200< | 200< |

Table 4

| | | Ex. 15 | Comp. Ex. 18 | Comp. Ex. 19 | Ex. 16 | Comp. Ex. 20 | Comp. Ex. 21 |
|---|---|---|---|---|---|---|---|
| (A) | PBT (pts. wt.) | 55 | 80 | 70 | — | — | — |
| | PET ( " ) | — | — | — | 55 | 80 | 70 |
| (B) | acrylonitrile-styrene copolymer ( " ) | 15 | — | — | 15 | — | — |
| (C) | E/GMA-g-AN/S ( " ) | 10 | — | 10 | 10 | — | 10 |
| | glass fiber ( " ) | 20 | 20 | 20 | 20 | 20 | 20 |
| Physical properties | flexing endurance (break angle) | 31~42 | 19~23 | 22~27 | 33~37 | 17~23 | 21~28 |
| | Izod impact strength, notched (kg·cm/cm) | 14.2 | 6.5 | 20.5 | 12.4 | 4.8 | 18.8 |
| | tensile strength ($kg/cm^2$) | 1081 | 1120 | 1010 | 1207 | 1250 | 1085 |
| | tensile elongation (%) | 5.2 | 2.6 | 8.3 | 4.6 | 1.9 | 7.9 |
| | thermal deformation temp. (°C) | 209 | 209 | 206 | 220 | 220 | 217 |

## Claims

## Claims for the following Contracting States : AT, BE, CH, LI, ES, GR, LU

**1.** A thermoplastic polyester resin composition comprising
(A) 100 parts by weight of a thermoplastic polyester resin,

(B) 1 to 100 parts by weight of a polymer or copolymer mainly comprising repeating units represented by the following general formula (1):

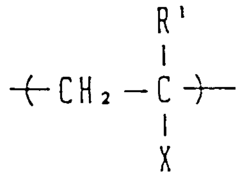

(1)

wherein $R^1$ stands for a hydrogen atom or a lower alkyl group and X stands for one or more groups selected from among -COOH and lower alkyl esters thereof,

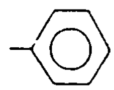

and -CN,

and

(C) 0.5 to 80 parts by weight of ($C^1$) an olefin copolymer comprising an α-olefin and an α,β-unsaturated acid glycidyl ester or ($C^2$) a graft copolymer comprising said olefin copolymer ($C^1$) and one or more (co)polymers mainly comprising repeating units represented by the following general formula (2), wherein said copolymer ($C^1$) and said (co)polymers are chemically bonded to each other to form a branched or cross linked sturcture:

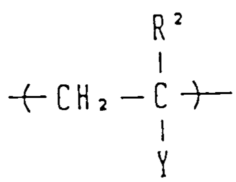

(2)

wherein $R^2$ stands for a hydrogen atom or a lower alkyl group and Y stands for one or more groups selected from -COOH, an alkyl ester of -COOH having 1 to 8 carbon atoms in the alkyl, phenyl and cyano.

**2.** A thermoplastic polyester resin composition as set forth in claim 1, wherein said thermoplastic polyester resin (A) is one mainly comprising polybutylene terephthalate.

**3.** A thermoplastic polyester resin composition as set forth in claim 1 or 2, wherein said polymer or copolymer (B) is an acrylonitrile-styrene copolymer, polymethyl methacrylate or polystyrene.

**4.** A thermoplastic polyester resin composition as set forth in any preceding claim, wherein the polymer or copolymer (B) is added in an amount of 3 to 80 parts by weight per 100 parts by weight of the polyester resin (A).

**5.** A thermoplastic polyester resin composition as set forth in any preceding claim, wherein the olefin copolymer ($C^1$) is a copolymer comprising ethylene and an α,β-unsaturated acid glycidyl ester.

**6.** A thermoplastic polyester resin composition as set forth in any preceding claim, in which Y in the formula (2) is selected from -COOH, $-COOCH_3$, $-COOC_2H_5$, $-COOC_4H_9$, $-COOCH_2CH(C_2H_5)C_4H_9$,

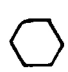

and -CN.

7. A thermoplastic polyester resin composition as set forth in any preceding claim, wherein the olefin copolymer ($C^1$) comprises 70 to 99% by weight of the $\alpha$-olefin and 30 to 1% of the unsaturated acid glycidyl ester.

8. A thermoplastic polyester resin composition as set forth in any preceding claim, wherein the component (C) is a graft copolymer comprising the olefin copolymer (C') and the specified (co)polymer(s) in a weight ratio between 95:5 and 40:60.

9. A thermoplastic polyester resin composition as set forth in any preceding claim, wherein the component (C) is added in an amount of 1 to 50 parts by weight per 100 parts by weight of the polyester resin (A).

10. A hinged molded article which is made of a composition as set forth in any preceding claim.

**Claims for the following Contracting States : DE, FR, GB, IT, NL, SE**

1. A hinged molded article which is made of a thermoplastic polyester resin composition comprising
(A) 100 parts by weight of a thermoplastic polyester resin;
(B) 1 to 100 parts by weight of a polymer or copolymer mainly comprising repeating units represented by the following general formula (1):

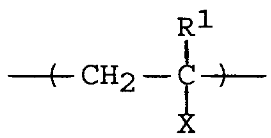 (1)

wherein $R^1$ stands for a hydrogen atom or a lower alkyl group and X stands for one or more groups selected from among -COOH and lower alkyl esters thereof,

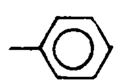

and -CN;
and
(C) 0.5 to 80 parts by weight of ($C^1$) an olefin copolymer comprising an $\alpha$-olefin and an $\alpha,\beta$-unsaturated acid glycidyl ester or ($C^2$) a graft copolymer comprising said olefin copolymer ($C^1$) and one or more (co)polymers mainly comprising repeating units represented by the following general formula (2), wherein said copolymer ($C^1$) and said (co)polymers are chemically bonded to each other to form a branched or crosslinked structure:

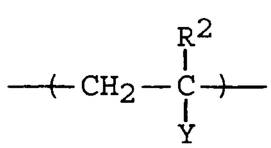 (2)

wherein $R^2$ stands for a hydrogen atom or a lower alkyl group and Y stands for one or more groups selected from -COOH, an alkyl ester of -COOH having 1 to 8 carbon atoms in the alkyl, phenyl and cyano.

2. A hinged molded article as set forth in claim 1, wherein said thermoplastic polyester resin (A) is one mainly comprising polybutylene terephthalate.

3. A hinged molded article as set forth in claim 1 or 2, wherein said polymer or copolymer (B) is an acrylonitrile-styrene copolymer, polymethyl methacrylate or polystyrene.

**4.** A hinged molded article as set forth in any preceding claim, wherein the polymer or copolymer (B) is added in an amount of 3 to 80 parts by weight per 100 parts by weight of the polyester resin (A).

**5.** A hinged molded article as set forth in any preceding claim, wherein the olefin copolymer ($C^1$) is a copolymer comprising ethylene and an $\alpha,\beta$-unsaturated acid glycidyl ester.

**6.** A hinged molded article as set forth in any preceding claim, in which Y in the formula (2) is selected from -COOH, $-COOCH_3$, $-COOC_2H_5$, $-COOC_4H_9$, $-COOCH_2CH(C_2H_5)C_4H_9$,

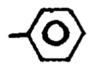

and -CN.

**7.** A hinged molded article as set forth in any preceding claim, wherein the olefin copolymer ($C^1$) comprises 70 to 99% by weight of the $\alpha$-olefin and 30 to 1% of the unsaturated acid glycidyl ester.

**8.** A hinged molded article as set forth in any preceding claim, where the component (C) is a graft copolymer comprising the olefin copolymer (C') and the specified (co)polymer(s) in a weight ratio between 95:5 and 40:60.

**9.** A hinged molded article as set forth in any preceding claim, wherein the component (C) is added in an amount of 1 to 50 parts by weight per 100 parts by weight of the polyester resin (A).

**10.** A thermoplastic polyester resin composition comprising a mixture of
(A) 100 parts by weight of a thermoplastic polyester resin, mainly comprising polybutylene terephthalate;
(B) 1 to 100 parts by weight of a polymer or copolymer which is an acrylonitrile-styrene copolymer, polymethyl methacrylate or polystyrene;
and
(C) 0.5 to 80 parts by weight of a copolymer comprising ethylene and an $\alpha,\beta$-unsaturated acid glycidyl ester.

**Patentansprüche**

**Patentansprüche für folgende Vertragsstaaten : AT, BE, CH, LI, ES, GR, LU**

**1.** Thermoplastische Polyesterharz-Zusammensetzung umfassend
(A) 100 Gewichtsteile eines thermoplastischen Polyesterharzes,
(B) 1 bis 100 Gewichtsteile eines Polymers oder Copolymers, das hauptsächlich sich wiederholende Einheiten der folgenden allgemeinen Formel (1) umfasst,

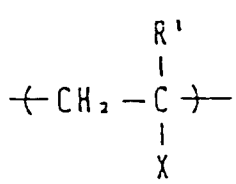

(1)

wobei $R^1$ für ein Wasserstoffatom oder eine Nieder-Alkylgruppe und X für eine oder mehrere Gruppe steht, ausgewählt aus -COOH und Nieder-Alkylestern davon,

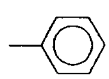

und -CN,
und

(C) 0,5 bis 80 Gewichtsteilen ($C^1$) eines Olefin-Copolymers, umfassend ein α-Olefin und einen α,β-ungesättigten Säureglycidylester, oder ($C^2$) eines Pfropf-Copolymers, umfassend das Olefin-Copolymer ($C^1$) und eines oder mehrere (Co-)Polymere, die hauptsächlich sich wiederholende Einheiten der folgenden allgemeinen Formel (2) umfassen, wobei das Copolymer ($C^1$) und die (Co-)Polymere chemisch aneinander gebunden sind und eine verzweigte oder vernetzte Struktur

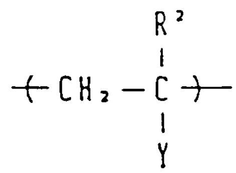

(2)

bilden, wobei $R^2$ für ein Wasserstoffatom oder eine Nieder-Alkylgruppe und Y für eine oder mehrere aus - COOH, einem Alkylester von -COOH mit 1 bis 8 Kohlenstoffatomen im Alkyl, Phenyl oder Cyano ausgesuchte Gruppe steht.

**2.** Thermoplastische Polyesterharz-Zusammensetzung nach Anspruch 1, wobei das thermoplastische Polyesterharz (A) hauptsächlich Polybutylenterephtalat umfasst.

**3.** Thermoplastische Polyesterharz-Zusammensetzung nach Anspruch 1 oder Anspruch 2, wobei das Polymer oder Copolymer (B) ein Acrylnitril-Styrol-Copolymer, Polymethylmethacrylat oder Polystyrol ist.

**4.** Thermoplastische Polyesterharz-Zusammensetzung nach einem der vorhergehenden Ansprüche, wobei das Polymer oder Copolymer (B) in einer Menge von 3 bis 80 Gewichtsteilen pro 100 Gewichtsteile Polyesterharz (A) zugegeben wird.

**5.** Thermoplastische Polyesterharz-Zusammensetzung nach einem der vorhergehenden Ansprüche, wobei das Olefin-Copolymer ($C^1$) ein Copolymer ist, das Ethylen und einen α,β-ungesättigten Säureglycidylester umfasst.

**6.** Thermoplastische Polyesterharz-Zusammensetzung nach einem der vorhergehenden Ansprüche, wobei Y in Formel (2) aus -COOH, $-COOCH_3$, $-COOC_2H_5$, $-COOC_4H_9$, $-COOCH_2CH(C_2H_5)C_4H_9$,

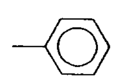

und -CN ausgewählt wird.

**7.** Thermoplastische Polyesterharz-Zusammensetzung nach einem der vorhergehenden Ansprüche, wobei das Olefin-Copolymer ($C^1$) 70 bis 99 Gew.-% des α-Olefins und 30 bis 1 % des ungesättigten Säureglycidylesters umfasst.

**8.** Thermoplastische Polyesterharz-Zusammensetzung nach einem der vorhergehenden Ansprüche, wobei der Bestandteil (C) ein Pfropf-Copolymer ist, das das Olefin-Copolymer (C') und das bezeichnete (die bezeichneten) (Co-)Polymer(e) in einem Gewichtsverhältnis zwischen 95 : 5 und 40 : 60 umfasst.

**9.** Thermoplastische Polyesterharz-Zusammensetzung nach einem der vorhergehenden Ansprüche, wobei der Bestandteil (C) in einer Menge von 1 bis 50 Gewichtsteilen pro 100 Gewichtsteile Polyesterharz (A) zugefügt wird.

**10.** Mit Hilfe eines Scharnierwerkzeuges hergestelltes Formteil, das aus einer Zusammensetzung nach einem der voranstehenden Ansprüche hergestellt wird.

**Patentansprüche für folgende Vertragsstaaten : DE, FR, GB, IT, NL, SE**

1. Mit Hilfe eines Scharnierwerkzeuges hergestelltes Formteil, das aus einer thermoplastischen Polyesterharz-Zusammensetzung umfassend
(A) 100 Gewichtsteile eines thermoplastischen Polyesterharzes,
(B) 1 bis 100 Gewichtsteile eines Polymers oder Copolymers, das hauptsächlich sich wiederholende Einheiten der folgenden allgemeinen Formel (1) umfasst,

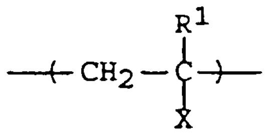

(1)

wobei $R^1$ für ein Wasserstoffatom oder eine Nieder-Alkylgruppe und X für eine oder mehrere Gruppe steht, ausgewählt aus -COOH und Nieder-Alkylestern davon,

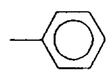

und -CN,
und
(C) 0,5 bis 80 Gewichtsteilen ($C^1$) eines Olefin-Copolymers, umfassend ein $\alpha$-Olefin und einen $\alpha,\beta$-ungesättigten Säureglycidylester, oder ($C^2$) eines Pfropf-Copolymers, umfassend das Olefin-Copolymer ($C^1$) und eines oder mehrere (Co-)Polymere, die hauptsächlich sich wiederholende Einheiten der folgenden allgemeinen Formel (2) umfassen, wobei das Copolymer ($C^1$) und die (Co-)Polymere chemisch gebunden sind und eine verzweigte oder vernetzte Struktur

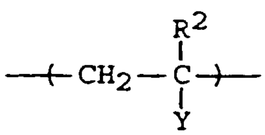

(2)

bilden, wobei $R^2$ für ein Wasserstoffatom oder eine Nieder-Alkylgruppe und Y für eine oder mehrere aus -COOH, einem Alkylester von -COOH mit 1 bis 8 Kohlenstoffatomen im Alkyl, Phenyl oder Cyano ausgesuchte Gruppe steht, hergestellt wird.

2. Mit Hilfe eines Scharnierwerkzeuges hergestelltes Formteil nach Anspruch 1, wobei das thermoplastische Polyesterharz (A) hauptsächlich Polybutylenterephtalat umfasst.

3. Mit Hilfe einem Scharnierwerkzeuges hergestelltes Formteil nach Anspruch 1 oder Anspruch 2, wobei das Polymer oder Copolymer (B) ein Acrylnitril-Styrol-Copolymer, Polymethylmethacrylat oder Polystyrol ist.

4. Mit Hilfe eines Scharnierwerkzeuges hergestelltes Formteil nach einem der vorhergehenden Ansprüche, wobei das Polymer oder Copolymer (B) in einer Menge von 3 bis 80 Gewichtsteilen pro 100 Gewichtsteile Polyesterharz (A) zugegeben wird.

5. Mit Hilfe eines Scharnierwerkzeuges hergestelltes Formteil nach einem der vorhergehenden Ansprüche, wobei das Olefin-Copolymer ($C^1$) ein Copolymer ist, das Ethylen und einen $\alpha,\beta$-ungesättigten Säureglycidylester umfasst.

6. Mit Hilfe eines Scharnierwerkzeuges hergestelltes Formteil nach einem der vorhergehenden Ansprüche, wobei Y in Formel (2) aus -COOH, $-COOCH_3$, $-COOC_2H_5$, $-COOC_4H_9$, $-COOCH_2CH(C_2H_5)C_4H_9$,

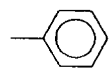

und -CN ausgewählt wird.

**7.** Mit Hilfe eines Scharnierwerkzeuges hergestelltes Formteil nach einem der vorhergehenden Ansprüche, wobei das Olefin-Copolymer ($C^1$) 70 bis 99 Gew.-% des $\alpha$-Olefins und 30 bis 1 % des ungesättigten Säureglycidylesters umfasst.

**8.** Mit Hilfe eines Scharnierwerkzeuges hergestelltes Formteil nach einem der vorhergehenden Ansprüche, wobei der Bestandteil (C) ein Pfropf-Copolymer ist, das das Olefin-Copolymer (C') und das bezeichnete (die bezeichneten) (Co-) Polymer(e) in einem Gewichtsverhältnis zwischen 95 : 5 und 40 : 60 umfasst.

**9.** Mit Hilfe eines Scharnierwerkzeuges hergestelltes Formteil nach einem der vorhergehenden Ansprüche, wobei der Bestandteil (C) in einer Menge von 1 bis 50 Gewichtsteilen pro 100 Gewichtsteile Polyesterharz (A) zugefügt wird.

**10.** Thermoplastische Polyesterharz-Zusammensetzung, umfassend eine Mischung von
(A) 100 Gewichtsteilen eines thermoplastischen Polyesterharzes, das hauptsächlich Polybutylenterephthalat umfasst;
(B) 1 bis 100 Gewichtsteilen eines Polymers oder Copolymers, das hauptsächlich ein Acrylnitril-Styrol-Copolymer, Polymethylmethacrylat oder Polystyrol ist;
und
(C) 0,5 bis 80 Gewichtsteilen eines Copolymers, das Ethylen und einen $\alpha,\beta$-ungesättigten Säureglycidylester umfasst.

**Revendications**
**Revendications pour les Etats contractants suivants : AT, BE, CH, LI, ES, GR, LU**

**1.** Une composition de résine polyester thermoplastique comprenant
(A) 100 parties en poids d'une résine polyester thermoplastique ;
(B) 1 à 100 parties en poids d'un polymère ou copolymère principalement constitué des unités répétées représentées par la formule générale (1) suivante :

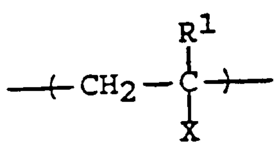

(1)

où $R^1$ représente un atome d'hydrogène ou un groupe alkyle inférieur et X représente un ou plusieurs groupes choisis parmi -COOH et les esters alkyliques inférieurs de celui-ci,

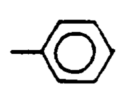

et -CN ;
et
(C) 0,5 à 80 parties en poids de ($C^1$) un copolymère d'oléfine comprenant une $\alpha$-oléfine et un ester glycidylique d'acide $\alpha,\beta$-insaturé ou de ($C^2$) un copolymère greffé comprenant ledit copolymère d'oléfine ($C^1$) et un ou plusieurs (co)polymères principalement constitués des unités répétées représentées par la formule générale (2) suivante, où ledit copolymère ($C^1$) et lesdits (co)polymères sont chimiquement liés entre eux pour former une structure ramifiée ou réticulée :

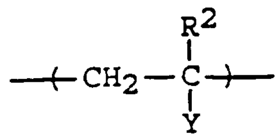

(2)

où $R^2$ représente un atome d'hydrogène ou un groupe alkyle inférieur et Y représente un ou plusieurs groupes choisis parmi -COOH, un ester alkylique d'un groupe -COOH ayant 1 à 8 atomes de carbone dans le groupe alkyle, un groupe phényle et cyano.

**2.** Une composition de résine polyester thermoplastique selon la revendication 1, dans lequel ladite résine polyester thermoplastique (A) est principalement constituée de polytéréphtalate de butylène.

**3.** Une composition de résine polyester thermoplastique selon la revendication 1 ou 2, dans lequel ledit polymère ou copolymère (B) est un copolymère acrylonitrile-styrène, le polyméthacrylate de méthyle ou le polystyrène.

**4.** Une composition de résine polyester thermoplastique selon l'une quelconque des revendications précédentes, dans lequel le polymère ou copolymère (B) est ajouté en une quantité de 3 à 80 parties en poids pour 100 parties en poids de la résine polyester (A).

**5.** Une composition de résine polyester thermoplastique selon l'une quelconque des revendications précédentes, dans lequel le copolymère d'oléfine ($C^1$) est un copolymère comprenant de l'éthylène et un ester glycidylique d'acide $\alpha,\beta$-insaturé.

**6.** Une composition de résine polyester thermoplastique selon l'une quelconque des revendications précédentes, dans lequel Y de la formule (2) est choisi parmi -COOH, $-COOCH_3$, $-COOC_2H_5$, $-COOC_4H_9$, $-COOCH_2CH(C_2H_5)C_4H_9$,

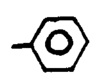

et -CN.

**7.** Une composition de résine polyester thermoplastique selon l'une quelconque des revendications précédentes, dans lequel le copolymère d'oléfine ($C^1$) comprend 70 à 99 % en poids de l'$\alpha$-oléfine et 30 à 1 % de l'ester glycidylique d'acide insaturé.

**8.** Une composition de résine polyester thermoplastique selon l'une quelconque des revendications précédentes, dans lequel le constituant (C) est un copolymère greffé comprenant le copolymère d'oléfine (C') et le(s) (co)polymère(s) spécifié(s) en un rapport pondéral compris entre 95:5 et 40:60.

**9.** Une composition de résine polyester thermoplastique selon l'une quelconque des revendications précédentes, dans lequel le constituant (C) est ajouté en une quantité de 1 à 50 parties en poids pour 100 parties en poids de la résine polyester (A).

**10.** Un article moulé à charnière qui est formé d'une composition telle que définie à l'une quelconque des revendications précédentes.

**Revendications pour les Etats contractants suivants : DE, FR, GB, IT, NL, SE**

**1.** Article moulé à charnière, qui est constitué d'une composition de résine polyester thermoplastique comprenant

(A) 100 parties en poids d'une résine polyester thermoplastique ;

(B) 1 à 100 parties en poids d'un polymère ou copolymère principalement constitué des unités répétées représentées par la formule générale (1) suivante :

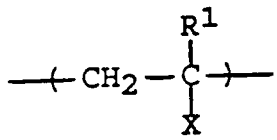

(1)

où $R^1$ représente un atome d'hydrogène ou un groupe alkyle inférieur et X représente un ou plusieurs groupes choisis parmi -COOH et les esters alkyliques inférieurs de celui-ci,

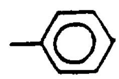

et -CN ;

et

(C) 0,5 à 80 parties en poids de ($C^1$) un copolymère d'oléfine comprenant une $\alpha$-oléfine et un ester glycidylique d'acide $\alpha,\beta$-insaturé ou de ($C^2$) un copolymère greffé comprenant ledit copolymère d'oléfine ($C^1$) et un ou plusieurs (co)polymères principalement constitués des unités répétées représentées par la formule générale (2) suivante, où ledit copolymère ($C^1$) et lesdits (co)polymères sont chimiquement liés entre eux pour former une structure ramifiée ou réticulée :

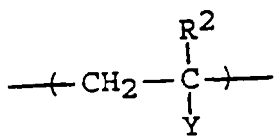

(2)

où $R^2$ représente un atome d'hydrogène ou un groupe alkyle inférieur et Y représente un ou plusieurs groupes choisis parmi -COOH, un ester alkylique d'un groupe -COOH ayant 1 à 8 atomes de carbone dans le groupe alkyle, un groupe phényle et cyano.

**2.** Article moulé à charnière selon la revendication 1, dans lequel ladite résine polyester thermoplastique (A) est principalement constituée de polytéréphtalate de butylène.

**3.** Article moulé à charnière selon la revendication 1 ou 2, dans lequel ledit polymère ou copolymère (B) est un copolymère acrylonitrile-styrène, le polyméthacrylate de méthyle ou le polystyrène.

**4.** Article moulé à charnière selon l'une quelconque des revendications précédentes, dans lequel le polymère ou copolymère (B) est ajouté en une quantité de 3 à 80 parties en poids pour 100 parties en poids de la résine polyester (A).

**5.** Article moulé à charnière selon l'une quelconque des revendications précédentes, dans lequel le copolymère d'oléfine ($C^1$) est un copolymère comprenant de l'éthylène et un ester glycidylique d'acide $\alpha,\beta$-insaturé.

**6.** Article moulé à charnière selon l'une quelconque des revendications précédentes, dans lequel Y de la formule (2) est choisi parmi -COOH, $-COOCH_3$, $-COOC_2H_5$, $-COOC_4H_9$, $-COOCH_2CH(C_2H_5)C_4H_9$,

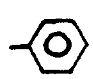

et -CN.

**7.** Article moulé à charnière selon l'une quelconque des revendications précédentes, dans lequel le copolymère d'oléfine ($C^1$) comprend 70 à 99 % en poids de l'$\alpha$-oléfine et 30 à 1 % de l'ester glycidylique d'acide insaturé.

8. Article moulé à charnière selon l'une quelconque des revendications précédentes, dans lequel le constituant (C) est un copolymère greffé comprenant le copolymère d'oléfine (C') et le(s) (co)polymère-(s) spécifié(s) en un rapport pondéral compris entre 95:5 et 40:60.

9. Article moulé à charnière selon l'une quelconque des revendications précédentes, dans lequel le constituant (C) est ajouté en une quantité de 1 à 50 parties en poids pour 100 parties en poids de la résine polyester (A).

10. Composition de résine polyester thermoplastique comprenant un mélange de
    (A) 100 parties en poids d'une résine polyester thermoplastique, principalement constituée de polytéréphtalate de butylène ;
    (B) 1 à 100 parties en poids d'un polymère ou copolymère qui est un copolymère acrylonitrile-styrène, le polyméthacrylate de méthyle ou le polystyrène ;
    et
    (C) 0,8 à 80 parties en poids d'un copolymère comprenant de l'éthylène et un ester glycidylique d'acide $\alpha,\beta$-insaturé.